# EUROPÄISCHE PATENTANMELDUNG

(11) **EP 4 357 398 A1**
(43) Veröffentlichungstag der Anmeldung: **24.04.2024**
(21) Anmeldenummer: 23000134.9
(22) Anmeldetag: 29.09.2023
(51) Int. Cl.: C08J 11/24

(54) **VERFAHREN ZUM CHEMISCHEN RECYCLEN VON POLYESTERN**

(30) Priorität: 18.10.2022 DE 102022003858
(71) Anmelder: WeylChem Performance Products GmbH, 65203 Wiesbaden (DE)
(72) Erfinder: Morschhäuser, Roman, 55122 Mainz (DE); Festersen, Lea, 65203 Wiesbaden (DE); Diekhans, Niklas, 65474 Bischhofsheim (DE); Kaufmann, Paul, 65239 Hochheim (DE)
(74) Vertreter: Ackermann, Joachim

(57) **Zusammenfassung**

Beschrieben wird ein Verfahren zur Herstellung von Polyestern, das durch folgende Maßnahmen gekennzeichnet ist:
a) Suspendieren von Polyethylenterephthalatabfällen in Ethylenglykol und/oder in 1,2-Propylenglykol enthaltend einen Umesterungskatalysator,
b) Erhitzen des Reaktionsgemisches zur Depolymerisation der Polyethylenterephthalatabfälle für eine so lange Zeit, bis das Polyethylenterephthalat in Monomere und in Oligomere zerfallen ist,
c) Zugabe von Endgruppen ausbildenden Monomeren in Form von Polyalkylenglykolmonoalkylethern, Fettalkoholen, Fettaminen, Fettsäuren oder Estern davon oder Gemischen von zwei oder mehreren davon, und/oder von Sulfo-(poly)-alkylenglykolen und/oder von Sulfoarylcarbonsäuren oder Estern davon ,
d) Zugabe von Sulfoarylendicarbonsäuren oder deren polyesterbildenden Derivaten,
e) gegebenenfalls Zugabe von aliphatischen Diolen, cycloaliphatischen Diolen, organischen Dicarbonsäuren, ihren polyesterbildenden Derivaten, Vernetzern oder Gemischen von zwei oder mehreren davon,
f) Erhitzen des Reaktionsgemisches unter Abdestillieren von Ethylenglykol, gegebenenfalls 1,2-Propylenglykol und weiteren im Reaktionsgemisch vorhandenen oder durch Umesterung und Polykondensation gebildeten Verbindungen, mit der Maßgabe, dass die Temperatur des Reaktionsgemisches 250°C nicht übersteigt.

Dieses Verfahren ermöglicht die Herstellung von Polyethylen- oder Polypropylenterephthalaten mit ausgewählten Endgruppen aus Polyesterabfällen. Die Verfahrensprodukte zeichnen sich durch gute schmutzablösende Eigenschaften aus und können als Zusätze in Wasch- und Reinigungsmitteln eingesetzt werden.

## Beschreibung

Die Erfindung betrifft die Herstellung ausgewählter Polyester zum Einsatz in Wasch- und Reinigungsmitteln. Diese Polyester zeichnen sich durch ein sehr gutes Schmutzablösevermögen aus.

Der Einsatz von Polyestern in Waschmitteln zur Verbesserung der Schmutzablösung von Textilien, zur Reduzierung der Wiederanschmutzung, zum Schutz der Fasern bei mechanischer Belastung und zum Ausrüsten der Gewebe mit einem Anti-Knittereffekt ist bekannt. Diese Polyester sind als SRP-Typen oder als Polyester mit schmutzablösenden Eigenschaften bekannt. Eine Vielzahl von SRP-Typen, deren Herstellung und deren Verwendung in Wasch- und Reinigungsmitteln sind in der Patentliteratur beschrieben.

Bislang wurden solche Polyester durch herkömmliche Polykondensationsverfahren aus den für den Aufbau des Polymerrückgrads und der Endgruppen erforderlichen Monomeren erzeugt. Dabei kamen hauptsächlich aus fossilen Quellen stammendes Dimethylterephthalat, Ethylenglykol und/oder 1,2-Propylenglykol zum Einsatz.

Zur Schonung von Ressourcen werden derzeit große Anstrengungen unternommen, aus fossilen Quellen stammende Rohstoffe durch alternative Rohstoffe zu ersetzen. Eine Möglichkeit besteht darin, aus Abfällen gewonnenes Polyethylenterephthalat, PET, alsRohstoff einzusetzen.

PET-Abfälle, sogenanntes r-PET, aus unterschiedlichsten Quellen stehen in großen Mengen zur Verfügung. Es ist bekannt, dass PET durch Hydrolyse oder Umesterung zu Monomeren oder Oligomeren abgebaut werden kann. Das erhaltene Produkt kann anschließend wieder als Ausgangsmaterial für die Herstellung von Polyestern eingesetzt werden. Solche Verfahren werden beispielsweise in der DE 42 20 473 A1, der DE 698 03 212 T2 und der DE 100 82 910 T1 beschrieben. Die dort aus den Polyesterabfällen neu hergestellten Polymeren werden unter typischen Polykondensationsbedingungen erhalten, also bei Temperaturen deutlich oberhalb von 250°C.

Bei der Herstellung von Polyestern, wie PET oder PBT, wird in konventionellen Polykondensationsverfahren mit Schmelzen bei Temperaturen weit über 200°C gearbeitet, z.B. bei Temperaturen von 260°C und darüber. Solch hohe Temperaturen sind technisch anspruchsvoll und erfordern den Einsatz von erheblichen Mengen an Energie und an Spezialausrüstung.

Es wurde jetzt überraschend gefunden, dass bei der Herstellung von SRP-Typen ausgehend von aus Abfällen gewonnenem PET die Polykondensation in handelsüblichen Rührkesseln und bei deutlich abgesenkten Temperaturen durchführen kann.

Die Verfahrensprodukte sind wasserlöslich oder wasserdispergierbar und zeichnen sich durch eine im Vergleich zu herkömmlichen PET-Abfällen verbesserte Bioabbaubarkeit aus.

Aufgabe der vorliegenden Erfindung ist die Bereitstellung eines Verfahrens zur SRP-Herstellung, das energetisch günstig ist, mit wiederverwendbaren Rohstoffen und in herkömmlichen Rührkesseln durchgeführt werden kann.

Die vorliegende Erfindung betrifft ein Verfahren zur Herstellung von Polyestern, das durch folgende Maßnahmen gekennzeichnet ist:
a) Suspendieren von Polyethylenterephthalatabfällen in Ethylenglykol und/oder in 1,2-Propylenglykol enthaltend einen Umesterungskatalysator,
b) Erhitzen des Reaktionsgemisches zur Depolymerisation der Polyethylenterephthalatabfälle für eine so lange Zeit, bis das Polyethylenterephthalat in Monomere und in Oligomere zerfallen ist,
c) Zugabe von Endgruppen ausbildenden Monomeren in Form von Polyalkylenglykolmonoalkylethern, Fettalkoholen, Fettaminen, Fettsäuren oder Estern davon oder Gemischen von zwei oder mehreren davon,
   und/oder von Sulfo-(poly)-alkylenglykolen und/oder von Sulfoarylcarbonsäuren oder Estern davon,
d) Zugabe von Sulfoarylendicarbonsäuren oder deren polyesterbildenden Derivaten,
e) gegebenenfalls Zugabe von aliphatischen Diolen, cycloaliphatischen Diolen, organischen Dicarbonsäuren, deren polyesterbildenden Derivaten, Vernetzern oder Gemische von zwei oder mehreren davon, vorzugsweise von weiterem Ethylenglykol und/oder 1,2-Propylenglykol und/oder von Terephthalsäure oder ihren polyesterbildenden Derivaten,
f) Erhitzen des Reaktionsgemisches unter Abdestillieren von Ethylenglykol, gegebenenfalls 1,2-Propylenglykol und weiteren im Reaktionsgemisch vorhandenen oder durch Umesterung und Polykondensation gebildeten Verbindungen, mit der Maßgabe, dass die Temperatur des Reaktionsgemisches 250°C nicht übersteigt.

Die erfindungsgemäß hergestellten Polyester enthalten bifunktionelle Einheiten, also Ethylenterephtalateinheiten und Ethylensulfoarylendicarboxylateinheiten oder 1,2-Propylenterephtalateinheiten und 1,2-Propylensulfoarylendicarboxylateinheiten oder Ethylenterephtalateinheiten, Ethylensulfoarylendicarboxylateinheiten, 1,2-Propylenterephtalateinheiten und 1,2-Propylensulfoarylendicarboxylateinheiten im Molekül. Die erfindungsgemäß hergestellten Polyester enthalten auch monofunktionelle Einheiten, also über endständige Carboxylgruppen des Polyesters gebundene nichtionische Endgruppen abgeleitet von Polyalkylenglykolmonoalkylethern, Fettalkoholen, Fettaminen oder Gemischen von zwei oder mehreren davon, und/oder über endständige Carboxylgruppen des Polyesters gebundene ionische Endgruppen abgeleitet von Sulfo-(poly)-alkylenglykolen und/oder über endständige Hydroxylgruppen des Polyesters gebundene nichtionische Endgruppen abgeleitet von Fettsäuren oder deren Estern und/oder über endständige Hydroxylgruppen des Polyesters gebundene ionische Endgruppen abgeleitet von Sulfoarylcarbonsäuren oder deren Estern.

Der Anteil aller bifunktionellen Einheiten im erfindungsgemäß hergestellten Polyester, bezogen auf den Anteil aller mono- und bifunktionellen Einheiten, beträgt vorzugsweise minimal 50 mol.-%.

Der Anteil aller monofunktionellen Einheiten im erfindungsgemäß hergestellten Polyester, bezogen auf den Anteil aller mono- und bifunktionellen Einheiten, beträgt vorzugsweise maximal 50 mol.-%.

Die Durchführung des erfindungsgemäßen Verfahrens kann in unterschiedlichen Apparaturen erfolgen. So kann das gesamte Verfahren beispielsweise in einem Rührkessel durchgeführt werden. Es können aber auch Extruder eingesetzt werden oder Kombinationen von Extrudern mit Rührkesseln.

Die in Schritt a) des erfindungsgemäßen Verfahrens eingesetzten Polyethylenterephthalatabfälle können aus unterschiedlichsten Quellen stammen. Dabei kann es sich um gebrauchte Gegenstände aus Polyethylenterephthalat handeln, wie um gebrauchte PET-Fasern, gebrauchte PET-Folien oder aus gebrauchten PET-Flaschen gewonnene Produkte oder es kann sich um Rückstände aus der PET-Produktion oder der PET-Verarbeitung, beispielsweise Abfälle aus Spritzgussverfahren oder aus anderen Formverfahren oder um Faserpräparationen, handeln.

Die in Schritt a) des erfindungsgemäßen Verfahrens eingesetzten Polyethylenterephthalatabfälle können unterschiedlichste Formen aufweisen. Fasern können beispielsweise als solche eingesetzt werden oder gegebenenfalls vor deren Einsatz auf ausgewählte Längen verkürzt werden. Folien und PET-Flaschen werden üblicherweise vor dem Einsatz zwecks besserer Handhabbarkeit zerkleinert. Rückstände aus der PET-Produktion oder der PET-Verarbeitung werden ebenfalls, sofern diese nicht bereits in handhabaren Dimensionen vorliegen, vor deren Einsatz zerkleinert.

Die in Schritt a) des erfindungsgemäßen Verfahrens eingesetzten Polyethylenterephthalatabfälle müssen nicht unbedingt aus sortenreinem PET bestehen. So können beispielsweise auch Mischgewebe mit solchen Komponenten zum Einsatz kommen, die vor der Durchführung des erfindungsgemäßen Verfahrens problemlos abgetrennt werden können oder die bei der Durchführung des erfindungsgemäßen Verfahrens nicht stören und danach problemlos aus dem Reaktionsgemisch abgetrennt werden können. Beispiele für solche Produkte sind beispielsweise textile Flächengebilde aus PET-Fasern und Verstärkungsfasern, wie Glas- oder Kohlefasern. Weitere Beispiele für solche Produkte sind beispielsweise textile Flächengebilde aus Mischungen aus PET-Fasern und Naturfasern, wie Cellulosefasern oder Baumwollfasern. Sortenfremde Produkte werden vorzugsweise an Ende von Schritt b) aus dem Reaktionsgemisch entfernt.

Vorzugsweise werden in Schritt a) sortenreine PET-Abfälle eingesetzt.

In Schritt a) des erfindungsgemäßen Verfahrens kann neben Polyethylenterephthalatabfällen zusätzlich auch frisch hergestelltes PET eingesetzt werden. Der Anteil von frisch hergestelltem PET, beispielsweise in der Form von Flocken oder Pellets, liegt üblicherweise deutlich unter 50 Gew.-%, vorzugsweise unterhalb von 10 Gew.,-% der Gesamtmenge des in diesem Schritt eingesetzten PET.

Vorzugsweise werden in Schritt a) ausschließlich PET-Abfälle eingesetzt.

Vorzugsweise liegen die in Schritt a) des erfindungsgemäßen Verfahrens eingesetzten Polyethylenterephthalatabfälle in der Form von Scheiben oder Zylindern vor, beispielsweise als Flocken oder als Pellets. Der Durchmesser dieser Scheiben oder Zylinder kann über weite Bereiche schwanken. Vorzugsweise beträgt deren Durchmesser 10 µm bis 20 cm, insbesondere 0,1 cm bis 10 cm.

Das in Schritt a) des erfindungsgemäßen Verfahrens eingesetzte PET wird in Ethylenglykol und/oder in 1 ,2-Propylenglykol suspendiert. Für den Fall, dass man als Endprodukt einen Polyester anstrebt, der hauptsächlich oder vollständig aus Wiederholeinheiten mit Ethylenglykoleinheiten besteht, empfiehlt sich der Einsatz von Ethylenglykol als Suspendiermedium. Für den Fall, dass man als Endprodukt einen Polyester anstrebt, der hauptsächlich oder vollständig aus Wiederholeinheiten mit 1 ,2-Propylenglykoleinheiten besteht, empfiehlt sich der Einsatz von 1,2-Propylenglykol als Suspendiermediumg. Für den Fall, dass man als Endprodukt einen Polyester anstrebt, der hauptsächlich oder vollständig aus Wiederholeinheiten mit Ethylenglykol- und mit 1 ,2-Propylenglykoleinheiten besteht, empfiehlt sich der Einsatz eines Gemisches von Ethylenglykol und 1,2-Propylenglykol als Suspendiermedium.

Das Suspendieren des PET kann durch Erhitzen und Rühren des Lösungsmittels unterstützt werden. Typische Temperaturen für diesen Schritt bewegen sich im Bereich von 10 bis 150°C, vorzugsweise im Bereich von 20 bis 100°C.

Das in Schritt a) erzeugte Reaktionsgemisch enthält darüber hinaus einen Umesterungskatalysator. Es können auch mehrere solcher Katalysatoren eingesetzt werden. Diese Katalysatoren sind dem Fachmann bekannt. Der Umesterungskatalysator kann bereits in den eingesetzten PET-Abfällen vorhanden sein oder er kann dem Reaktionsgemisch in den Schritten a) oder b) zugesetzt werden. In der späteren Polykondensationsstufe f) kann weiterer Umesterungskatalysator zugesetzt werden. Beispiele für geeignete Katalysatoren sind in Ethylenglykol oder 1,2-Propylenglykol lösliche Titanverbindungen, wie z. B. Tetraisopropyltitanat oder Tetrabutyltitanat, oder Zinnverbindungen, wie z. B. n-Butylzinnhydroxidoxid oder Monobutylzinntris-(2-ethylhexanoat), sowie Alkali- oder Erdalkalimetallalkoholate oder Antimontrioxid/-Calciumacetat..

In Schritt b) des erfindungsgemäßen Verfahrens wird das in Schritt a) erhaltene Reaktionsgemisch erhitzt, um die Depolymerisation des PET zu erreichen. Temperatur, Druck und Dauer bei diesem Schritt sind so zu wählen, dass am Ende dieses Schrittes die Polyethylenterephthalatabfälle in Monomere und kurzkettige Oligomere zerfallen sind.

Die Depolymerisation des PET in Schritt b) erfolgt mit Hilfe von Ethylenglykol und/oder 1,2-Propylenglykol in Suspension oder in Lösung in Gegenwart von Umesterungskatalysatoren. Typischerweise wird in der Siedehitze der eingesetzten Glykole gearbeitet. Ziel dieser Depolymerisationsstufe ist es, die Kettenlängen des PET zu reduzieren bis hin zu den Monomeren, Diglykolterephthalat oder Oligomeren davon. Die Kettenlänge der erzeugten Oligomere am Ende von Schritt b) sollte nicht mehr als 10 Ethylenterephthalat-Wiederholeinheiten betragen.Am Ende der Depolymerisation muss sich das gesamte eingesetzte PET klar im verwendeten Glykol gelöst haben. Ansonsten bilden sich zu lange PET Domänen aus, die für die Wirkungsweise des späteren Verfahrensproduktes abträglich sind.

Die Temperaturen des Reaktionsgemisches in Schritt b) betragen üblicherweise zwischen 150 und 200 °C. Vorzugsweise wird im Bereich der Siedetemperatur des verwendeten Glykols oder Glykolgemisches gearbeitet, also im Bereich zwischen 185 und 200°C.

Die sonstigen Depolymerisationsparameter, also Druck, eingeleitete mechanische Energie und Reaktionsdauer, stehen in Zusammenhang mit der verwendeten Apparatur, wie Rührkessel oder Extruder. Rührkessel eignen sich besonders für diskontinuierliche Fahrweise sowie für kleinere Anlagen.

Im Allgemeinen beträgt der Druck in Stufe b) zwischen 0 und 5 bar, vorzugsweise zwischen 1 und 2,5 bar und ganz besonders bevorzugt 1 bar bzw. Normaldruck (physikalische Atmosphäre von 1,013 bar).

Im Allgemeinen wird das Reaktionsgemisch in Schritt b) gerührt. Typische Rührgeschwindigkeiten bewegen sich im Bereich von 10 bis 40 Upm zu Beginn der Depolymerisation und 100 bis 150 Upm am Ende der Depolymerisation. Typische Reaktionszeiten in Schritt b) liegen im Bereich von 1 h bis 50 h, vorzugsweise 90 bis 600 min.

Gegebenenfalls können während der Durchführung der Depolymerisation in Schritt b) bereits Monomere dem Reaktionsgemisch zugesetzt werden, welche in das spätere Verfahrensprodukt als Teil der Polyesterkette eingebaut werden sollen. Beispiele für solche Monomere sind Dimethylterephthalat, Dimethylsulfoisophthalat oder dessen Alkalisalz. Vorzugsweise werden solche Monomere aber erst in Schritt d) oder e) dem Reaktionsgemisch zugesetzt.

Bei der Durchführung von Schritt b) bietet es sich an, bei der Umesterung entstehende niedermolekulare Bestandteile, wie Wasser oder Methanol, oder Bestandteile des Lösungsmittels, wie Ethylenglykol oder 1,2-Propylenglykol, aus dem Reaktionsgemisch zu entfernen. Dabei kann dem Reaktionsgemisch gleichzeitig Ethylenglykol und/oder 1,2-Propylenglykol oder andere Diole, die in das spätere Verfahrensprodukt als Teil der Polyesterkette eingebaut werden sollen, zugeführt werden. Vorzugsweise werden solche Glykole oder Diole aber erst in Schritt e) dem Reaktionsgemisch zugesetzt.

Nach Beendigung von Schritt b) werden dem überwiegend Ethylenglykol und/oder 1,2-Propylenglykol sowie Ethylenterephthalat-Oligomere enthaltenden Reaktionsgemisch diejenigen Monomeren und Reaktanten zugesetzt, welche die Polyesterkette des Endproduktes und dessen Endgruppen ausbilden sollen.

Das Reaktionsgemisch kann zu diesem Zweck aus dem bisherigen Reaktor entfernt und in einen neuen Reaktor überführt werden. Vorteilhafterweise wird das Reaktionsgemisch in dem bisherigen Reaktor belassen und die Reaktion wird als Eintopfreaktion ausgeführt.

Bei der Zugabe dieser Monomeren und Reaktanten kann Druck und Temperatur am Ende von Schritt b) beibehalten oder geändert werden. So kann beispielsweise das Reaktionsgemisch bei Vorliegen eines Überdrucks am Ende von Schritt b) entspannt werden und die Monomeren können in Schritten c), d) und gegebenenfalls e) bei der Temperatur des Reaktionsgemisches am Ende von Schritt b) diesem zugesetzt werden. Alternativ kann das Reaktionsgemisch abgekühlt werden, bevor mit der Zugabe der Monomeren und Reaktanten begonnen wird.

In Schritt c) werden dem Reaktionsgemisch Endgruppen ausbildende Reaktanten zugesetzt. Dabei handelt es sich um Polyalkylenglykolmonoalkylether, Fettalkohole, Fettamine, Fettsäuren oder deren Ester oder um Gemische von zwei oder mehreren davon, welche nichtionische Endgruppen im Verfahrensprodukt ausbilden. Anstelle davon können Sulfo-(poly)-alkylenglykole, Sulfoarylcarbonsäuren oder deren Ester, welche ionische Endgruppen im Verfahrensprodukt ausbilden, zugesetzt werden. Es können aber auch Gemische von nichtionische Endgruppen und ionische Endgruppen ausbildende Reaktanten zugesetzt werden.

Vorzugsweise handelt es sich bei den Polyalkylenglykolmonoalkylethern um Verbindungen der Formel (I), bei den Fettalkoholen um Verbindungen der Formel (II), bei den Fettaminen um Verbindungen der Formel (III), bei den Fettsäure(ester)n um Verbindungen der Formel (IV),bei den Sulfo-(poly)-alkylenglykolen um Verbindungen der Formel (V) und bei den Sulfoarylcarbonsäuren und deren Estern um Verbindungen der Formel (VI)

H-(O-CₘH₂ₘ)ₙ-OR¹ (I),

R²-OH (II),

R²-NH₂ (III),

R²-COOR³ (IV),

H-(O-CₒH₂ₒ)ₚ-SO₃⁻(Mⁱ⁺)_{1/l} (V),

R³OOC-C₆H₄-SO₃⁻ (Mⁱ⁺)_{1/l} (VI),

worin
R¹ C₁-C₆-Alkyl, Cycloalkyl, Aryl oder Aralkyl ist,
R² geradkettiges oder verzweigtes Alkyl mit 6-20 Kohlenstoffatormen bedeutet,
R³ Wasserstoff, C₁-C₆-Alkyl, Cycloalkyl, Aryl oder Aralkyl ist,
m und o unbhängig voneinander 2 oder 3 sind,
n eine ganze Zahl von 5 bis 250 ist
p eine ganze Zahl von 1 bis 10 ist,
M ein Kation der Wertigkeit i ist, und
i eine ganze Zahl von 1 bis 4 bedeutet.

Diese Verbindungen sind bekannt und werden zur Ausbildung von Endgruppen in SRP bereits eingesetzt.

In Schritt d) werden dem Reaktionsgemisch Sulfoarylendicarbonsäuren oder deren polyesterbildenden Derivate zugesetzt. Dabei handelt es sich um ein oder mehrere Sulfogruppen enthaltende aromatische Dicarbonsäuren, deren Ester oder Säurehalogenide. Beispiele dafür sind ein oder zwei Sulfogruppen enthaltende Terephthalsäuren, Isophthalsäuren, Phthalsäuren oder Naphthalindicarbonsäuren oder deren Mono- oder Dialkylester, vorzugsweise deren Mono- oder Dimethylester, oder deren Säurechloride. Anstelle der Sulfogruppen enthaltenden aromatischen Dicarbonsäuren, Ester oder Säurehalogenide können auch Salze von Sulfogruppen enthaltenden aromatischen Dicarbonsäuren, Estern oder Säurehalogeniden eingesettz werden. Beispiele dafür sind Alkalisalze, wie Natrium- oder Kaliumsalze, oder Ammoniumsalze.

Bevorzugt wird als Sulfoarylendicarbonsäure eine Sulfoisophthalsäure oder ein Salz dieser Säure eingesetzt oder es wird als polyesterbildendes Derivat davon ein Mono- oder Diester der Sulfoisophthalsäure oder eines Salzes davon eingesetzt.

Besonders bevorzugt wird eine 5-Sulfoisophthalsäure, ein Alkalisalz der 5-Sulfoisophthalsäure, ein Mono- oder Dialkylester der 5-Sulfoisophthalsäure oder ein Mono- oder Dialkylester eines Alkalisalzes der 5-Sulfoisophthalsäure eingesetzt.

In Schritt e) können dem Reaktionsgemisch gegebenenfalls aliphatische Diole, cycloaliphatische Diole, organische Dicarbonsäuren, deren polyesterbildenden Derivate, Vernetzer oder Gemische von zwei oder mehreren davon zugesetzt werden.

Bei den aliphatischen Diolen kann es sich um Ethylenglykol und/oder um 1,2-Propylenglykol handeln, welche zu einem großen Anteil die Diolkomponente in der Polyesterkette des Verfahrensproduktes bilden. Es kann sich aber auch um aliphatische oder cycloaliphatische Diole handeln, welche zu einen geringen Anteil die Diolkomponente in der Polyesterkette des Verfahrensprodukte bilden. Beispiele für solche Diole sind Polyethylenglykole, Polypropylenglykole, Polybutylenglykole, 1,2-Butylenglykol, 1,4-Dimethylolcyclohexan oder 1,4-Diethylolcyclohexan.

Bei den organischen Dicarbonsäuren oder deren polyesterbildenden Derivaten kann es sich um Terephthalsäure oder um Dimethylterephthalt handeln, welche zu einem großen Anteil die Dicarbonsäurekomponente in der Polyesterkette des Verfahrensproduktes bilden. Es kann sich aber auch um aliphatische, cycloaliphatische oder aromatische Dicarbonsäuren oder deren polyesterbildende Derivate handeln, welche zu einen geringen Anteil die Dicarbonsäurekomponente in der Polyesterkette des Verfahrensproduktes bilden. Beispiele für solche Dicarbonsäuuren sind Adipinsäure, Sebazinsäure, Cyclohexandicarbonsäure, Isophthalsäure oder Naphthalindicarbonsäuren oder die entsprechenden Mono- oder Dimethylester dieser Dicarbonsäuren.

Bei den Vernetzern handelt es sich um drei- oder höherfunktionelle Verbindungen, mit denen die Kette des Polyester-Endproduktes verzweigt werden kann oder mit denen mehrere Polyesterketten miteinander verbunden werden können. Beispiele für Vernetzer sind tri- oder tetrafunktionelle Alkohole oder Carbonsäuren, wie Trimethylolpropan, Pentaetythrit, Trimellitsäure, Trimesinsäure oder Pyromellitsäure oder deren Methylester. Vernetzer werden dem Reaktionsgemisch, wenn überhaupt, nur in sehr geringen Mengen zugesetzt um eine übermäßige Vernetzung bzw. Verzweigung zu verhindern. Besonders bevorzugt werden überhapt keineVernetzer eingesetzt.

Die Reihenfolge der Schritte c), d) und gegebenenfalls e) kann beliebig geändert werden. Es können auch alle Monomere und Reaktanten aus den Schritten c), d) und gegebenenfalls e) in einem gemeinsamen Schritt dem Reaktionsgemisch hinzugefügt werden.

Nach der Zugabe der Monomeren und Reaktanten in Schritten c), d) und gegebenenfalls e) des erfindungsgemäßen Verfahrens erfolgt in Schritt f) des erfindungsgemäßen Verfahrens die Polykondensation zum gewünschten Endprodukt.

Die Synthese des Polyesters in Schritt f) erfolgt nach an sich bekannter Vorgehensweise, indem die für den Aufbau des gewünschten Polyesters erforderlichen Monomeren unter Zusatz eines Katalysators zunächst bei Normaldruck auf Temperaturen von bis zu 220°C, vorzugsweise unter Verwendung einer InertAtmosphäre, vorverestert werden. Neben dem Katalysator wird vorzugsweise noch ein Salz einer kurzkettigen Carbonsäure, bevorzugt Acetat, dem Reaktionsgemisch hinzugefügt.

Nach der Vorveresterung können die gewünschten Molekulargewichte im Vakuum bei Temperaturen von 160 bis 250°C durch Abdestillieren überstöchiometrischer Mengen der eingesetzten Glykole aufgebaut werden.

Das Molekulargewicht des gewünschten Polyesters kann durch die Auswahl der Proportionen von Alkohol- und Säurekomponenten gesteuert werden. Dem Fachmann auf dem Gebiet der Polykondensation sind diese Vorgehensweisen bekannt.

Die Polykondensation erfolgt bei hohen Temperaturen von bis zu 250°C und unter Abtrennung von flüchtigen Verbindungen. Da die Polykondensation eine Gleichgewichtsreaktion ist, fördert das Abtrennen von flüchtigen Reaktionsprodukten aus dem Reaktionsgemisch die Ausbildung von Polyestern.

Während der Polykondensation sollten im Reaktionsgemisch stets die bei der Polykondensation gebileten flüchtigen Umsetzungsprodukte abdestiliert werden. Gegebenenfalls kann während der Polykondensation weiteres Ethylenglykol oder 1,2-Propylenglykol insbesondere kontinuierlich verteilt über die gesamte Reaktionsdauer zugegeben werden.

In Schritt f) kann zusätzlicher Katalysator beispielsweise entsprechend 50 bis 250 ppm Titan oder Zinn eingespeist werden.

Die Reaktionsdauer in Schritt f) muß eine praktisch quantitative Umsetzung der Ethylenterephthalat-Oligomere und Monomeren aus Schritt b) und der anderen Monomeren und Reaktanten aus den Schritten c), d) und gegebenenfalls e) zum gewünschten Polyester gewährleisten.

Die Temperaturen des Reaktionsgemisches in Schritt f) betragen üblicherweise zwischen 150 und 250°C, insbesondere zwischen 160 und 235°C. Vorzugsweise wird im Bereich der Schmelzetemperatur des entstandenen Polyestergemisches gearbeitet, ganz besonders bevorzugt im Bereich zwischen 185 und 235°C.

Die sonstigen Polykondensationsparameter, also Druck, eingeleitete mechanische Energie und Reaktionsdauer, stehen wie bei Schritt b) in Zusammenhang mit der verwendeten Apparatur, wie Rührkessel oder Extruder.

Bei der Durchführung von Schritt f) wird üblicherweise mit Normaldruck oder insbesondere mit Unterdruck gearbeitet.

Der Druck in Stufe f) beläuft sich vorzugsweise auf 0,1 mbar bis 1,013 bar (Normaldruck). Insbesondere wird bei Drucken von 5 bis 500 mbar gearbeitet.

Typischerweise wird mit einer Polykondensation bei Normaldruck begonnen und gegen Ende der Polykondensation mit Unterdruck gearbeitet.

Bei der Durchführung von Schritt f) wird das Reaktionsgemisch vorzugsweise gerührt. Typische Rührgeschwindigkeiten bewegen sich im Bereich von 10 bis 200 Upm. Typische Reaktionszeiten in Schritt f) liegen im Bereich von 30 min. bis 20 h, vorzugsweise von 45 min. bis 12 h.

Nach Beendigung der Polykondensation in Schritt f) liegt das heiße Reaktionsgemisch in flüssiger Form vor. Im Anschluss daran wird das Reaktionsgemisch in einem Schritt g) abkühlen gelassen, wodurch das gewünschte Endprodukt als Feststoff anfällt.

Dieses wird sodann in einem Schritt h) von den flüssigen Bestandteilen des Reaktionsgemisches abgetrennt, beispielsweise durch Filtration.

Alternativ kann das nach Beendigung der Polykondensation in Schritt f) angefallene Verfahrensprodukt aus dem Reaktor in eine Granulierungsvorrichtung überführt werden und zu Granulat verarbeitet werden.

Das erhaltene feste Verfahrensprodukt kann auch in Wasser oder in einem wässrig-alkoholischen Gemisch aufgelöst werden. Der Gewichtsanteil an Polyester in der wässrigen oder wässrig-alkoholischen Lösung kann von 5,0 bis 80,0 Gew. %, bevorzugt 10,0 bis 75,0 Gew. % und besonders bevorzugt 50,0 bis 70,0 Gew. % betragen, jeweils bezogen auf das Gesamtgewicht der wässrigen Lösung.

Bei den Verfahrensprodukten handelt es sich vorzugsweise um Polyester umfassend
A) Struktureinheiten der Formel (VII) oder der Formel (VIII) oder der Formeln (VII) und (VIII),
B) Struktureinheiten der Formel (IX) oder der Formel (X) oder der Formeln (IX) und (X), und
C) gegebenenfalls an Struktureinheiten der Formel (XI)

   -CO-1,4-C₆H₄-CO-O-C₂H₄-O- (VII),

   -CO-1,4-C₆H₄-CO-O-(C₃H₆-O)- (VIII),

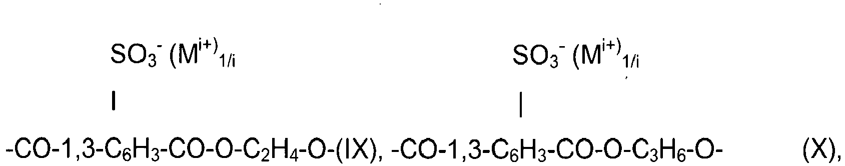

   -CO-R⁴-CO-O-R⁵-O- (XI),

   worin der Anteil der Struktureinheiten A), B) und gegegenenfalls C) 100 % aller Strukturenheiten im Polyester ausmacht,
   und wobei der Polyester Endgruppen der Formel (XII), (XIII), (XIV), (XV), (XVI) oder (XVII) oder der Formeln (XII) und (XVI) oder (XII) und (XVII), oder (XII), (XVI) und (XVII), oder der Formeln (XIII) und (XVI) oder (XIII) und (XVII), oder (XIII), (XVI) und (XVII), oder der Formeln (XIV) und (XVI) oder (XIV) und (XVII), oder (XIV), (XVI) und (XVII) oder der Formeln (XV) und (XVI) oder (XV) und (XVII), oder (XV), (XVI) und (XVII) aufweist

      -(O-CₘH₂ₘ)ₙ-OR¹ (XII),

      R²-O- (XIII),

      R²-NH- (XIV),

      R²-COO- (XV),

      -(O-CₒH₂ₒ)ₚ-SO₃⁻ (Mⁱ⁺)_{1/1} (XVI),

      -OC-C₆H₄-SO₃⁻ (Mⁱ⁺)_{1/l} (XVII),
   wobei Endgruppen der Formeln (XII), (XIII), (XIV) und (XVI) an terminale Carboxylgruppen des Polyesters gebunden sind und Endgruppen der Formeln (XV) und (XVII) an terminale Hydroxylgruppen des Polyesters gebunden sind, und wobei neben den Endgruppen der Formeln (XII), (XIII), (XIV), (XV); (XVI) und (XVII) und gegebenenfalls terminalen Carboxyl- und Hydroxylgruppen keine weiteren Endgruppen im Polyester vorhanden sind, und worin -1,4-C₆H₄- 1,4-Phenylen bedeutet, SO₃⁻(Mⁱ⁺⁾_{1/i} -1,3-C₆H₃- Sulfo-1,3-Phenylen bedeutet,
   R¹ C₁-C₆-Alkyl, Cycloalkyl, Aryl oder Aralkyl ist,
   R² geradkettiges oder verzweigtes Alkyl mit 6-20 Kohlenstoffatormen bedeutet,
   R³ Wasserstoff, C₁-C₆-Alkyl, Cycloalkyl, Aryl oder Aralkyl ist,
   R⁴ ein Alkylen-, Cycloalkylen- oder Arylenrest mit Ausnahme von 1,4-Phenylen oder Sulfo-1,3-Phenylen ist,
   R⁵ ein Alkylenrest, von Polyoxyalkylen abgeleiteter Rest oder ein Cycloalkylenrest ist. m und o unbhängig voneinander 2 oder 3 sind,
   n eine ganze Zahl von 5 bis 250 ist, vorzugsweise von 15 bis 120,
   p eine ganze Zahl von 1 bis 10 ist, vorzugsweise von 1 bis 5 und insbesondere 1 oder 2 ist,
   M ein Kation der Wertigkeit i ist, und
   i eine ganze Zahl von 1 bis 4 bedeutet.

Die Gewichtsmittel der Molekulargewichte M_{w} der erfindungsgemäß hergestellten Polyester liegen in der Regel im Bereich von 2.500 g/mol bis 20.000 g/mol, bevorzugt 3.000 g/mol bis 15.000 g/mol, besonders bevorzugt 4.000 g/mol bis 13.000 g/mol.

Das Erzeugen der gewünschten Molekulargewichte kann durch die Auswahl der Verhältnisse der einzelnen Monomeren zueinander erfolgen. Diese Vorgehensweise ist dem Fachmann bekannt.

Das Gewichtsmittel der Molekulargewichte wird mittels Größenausschlusschromatographie bestimmt. Diese wird vorzugsweise in einem Gemisch von Wasser und Acetonitril durchgeführt, wobei eine Kalibierung mit Hilfe sulfonierter Polystyrol-Standards mit enger Molekulargewichtsverteilung vorgenommen wird. Enge Molekulargewichtsverteilung bedeutet dabei eine Polydispersität ***Ð*** (M_{w}/Mₙ) von kleiner als 1,5.

Vorzugsweise ist n eine ganze Zahl von 15 bis 120, und p ist eine ganze Zahl von 1 bis 5 und insbesondere 1 oder 2.

Vorzugsweise ist i eine ganze Zahl von 1 bis 2, insbesondere 1.

M ist vorzugsweise ein Kation eines Alkalimetalls, des Wasserstoffs oder ein Ammoniumkation, insbesondere ein Kation des Natriums oder des Kaliums.

R¹ ist vorzugsweise C₁-C₆-Alkyl, insbesondere Methyl oder Ethyl.

R² ist vorzugsweise geradkettiges oder verzweigtes Alkyl mit 8 bis 16 Kohlenstoffatormen.

R³ ist vorzugsweise Wasserstoff oder C₁-C₆-Alkyl, insbesondere Wasserstoff, Methyl oder Ethyl.

R⁴ ist vorzugsweise ein Alkylenrest mit 2 bis 8 Kohlenstoffatomen oder ein Cyclohexylenrest, insbesondere ein von Adipinsäure-, Sebazinsäure oder 1,4-Cyclohexandicarbonsäure abgeleiteter Rest.

R⁵ ist vorzugsweise ein Alkylenrest mit 2 bis 4 Kohlenstoffatomen, ein von Polyoxyethylen abgeleiteter Rest, ein von Polyoxypropylen abgeleiteter Rest oder ein von 1,4-Cyclohexandimethylol oder von 1,4-Cyclohexandiethylol abgeleiteter Rest, insbesondere ein von Ethylenglykol, 1,2-Propylenglykol, 1,2-Butylenglykol, Polyoxyethylen mit 2 bis 50 Oxyethylen-Wiederholeinheiten oder ein von Polyoxypropylen mit 2 bis 50 Oxyproylen-Wiederholeinheiten abgeleiteter Rest.

Bevorzugte erfindungsgemäß hergestelte Polyester enthalten neben den Struktureinheiten der Formeln (VII) und (IX) oder der Formeln (VIII) und (X) oder der Formeln (VII), (VIII), (IX) und (X) und gegebenenfalls vorhandenen terminalen Hydroxyl- und/oder Carboxylgruppen nur noch Endgruppen der Formel (XII) oder (XVI) oder der Formeln (XII) und (XVII).

Der Anteil an Struktureinheiten der Formel (VII) oder der Formel (VIII) oder der Formeln (VII) und (VIII) im erfindungsgemäß hergestelten Polyester beträgt üblicherweise 5 bis 95 mol %, bezogen auf alle Struktureinheiten.

Der Anteil an Struktureinheiten der Formel (IX) oder der Formel (X) oder der Formeln (IX) und (X) im erfindungsgemäß hergestelten Polyester beträgt üblicherweise 5 bis 95 mol %, bezogen auf alle Struktureinheiten.

Der Anteil an Struktureinheiten der Formel (XI) im erfindungsgemäß hergestelten Polyester beträgt üblicherweise 0 bis 5 mol %, bezogen auf alle Struktureinheiten.

Vorzugsweise enthält der erfindungsgemäß hergestellte Polyester keine Struktureinheiten der Formel (XI).

Der Anteil an Endgruppen der Formel (XII), (XIII), (XIV), (XV), (XVI) oder (XVI) oder der Formeln (XII) und (XVI) oder (XII) und (XVII), oder (XII), (XVI) und (XVII), oder der Formeln (XIII) und (XVI) oder (XIII) und (XVII), oder (XIII), (XVI) und (XVII), oder der Formeln (XIV) und (XVI) oder (XIV) und (XVII), oder (XIV), (XVI) und (XVII) oder der Formeln (XV) und (XVI) oder (XV) und (XVII), oder (XV), (XVI) und (XVII) im erfindungsgemäß hergestellten Polyester beträgt typischerweise 95 bis 100 mol.- %, bezogen auf alle Endgruppen im Polyester. Weitere mögliche Endgruppen sind terminale Hydroxyl- oder Carboxylgruppen.

Bevorzugte erfindungsgemäß hergestellte Polyester weisen neben gegebenenfalls vorliegenden terminalen Hydroxyl- und/oder Carboxylgruppen nur noch Endgruppen der Formel (XII) oder (XVI) oder der Formeln (XII) und (XVI).auf, wobei der Anteil der Endgruppen der Formel (XII) 5 bis 95 mol.-% und der Anteil der Endgruppen der Formel (XVI) 95 bis 5 mol.-% beträgt, bezogen auf alle Endgruppen im Polyester.

Die erfindungsgemäß hegestellten Polyester können in unterschiedlichen Darreichungsformen in Wasch- und Reinigungsmittel eingearbeitet werden.

Wasch- und Reinigungsmittel können in der Form von Granulaten, Tabletten, Gelen, wässrigen Dispersionen oder wässrigen Lösungen vorliegen.

Die erfindungsgemäß hergestellten Polyester verleihen Textilfasern signifikant verbesserte schmutzablösende Eigenschaften und unterstützen das Schmutzablösevermögen der übrigen Bestandteile von Wasch- und Reinigungsmitteln gegenüber öligen, fettigen oder Pigmentanschmutzungen wesentlich.

Weiter von Vorteil kann die Verwendung der erfindungsgemäß hergestellten Polyester in Nachbehandlungsmitteln für die Wäsche, beispielsweise in einem Weichspülmittel sein.

Mit Hilfe der erfindungsgemäß hergestellten Polyester in Reinigungsmitteln für Oberflächen, insbesondere für harte Oberflächen, lassen sich die behandelten Oberflächen schmutzabstoßend ausrüsten.

Die erfindungsgemäß hergestellten Polyester können auch in Haushaltsreinigungsmitteln, beispielsweise in Allzweckreinigern, oder in Geschirrspülmitteln, in Teppichreinigungs- und Imprägniermitteln, in Reinigungs- und Pflegemitteln für Böden und andere harte Oberflächen, z.B. aus Kunststoff, Keramik, Glas oder mit Nanotechnologie beschichtete Oberflächen eingearbeitet werden.

Beispiele für technische Reinigungsmittel sind Kunststoffreinigungs- und Pflegemittel, etwa für Gehäuse und Autoarmaturen, sowie Reinigungs- und Pflegemittel für lackierte Oberflächen wie etwa Autokarosserien.

Die nachfolgenden Beispiele sollen die Erfindung erläutern ohne sie darauf einzuschränken.

### Beispiel 1a (Herstellung eines Vorproduktes, Depolymerisationsstufe)

In einem 3 Liter Dreihalskolben mit Rückflusskühler, KPG Rührer und Innenthermometer wurden 200 Gramm gereinigtes r-PET Granulat vorgelegt. Dies entspricht einer molaren Einwaage von 1,44 mol Terephthalsäure (angenommene Dichte von 1,38g/cm³ und einem Molekulargewicht der Repetiereinheit von 192,17 g) und mit 500 ml 1,2-Ethylenglykol versehen. Nach Inertisierung mit Stickstoff wurde 0,2g Ti(iprop)₄ und 0,3 g Natriumacetat als Umesterungskatalysator zugesetzt und die Reaktionsmischung auf Siedetemperatur erhitzt (190°C). Die Mischung wurde solange am Rückfluss gekocht, bis alle Feststoffanteile in Lösung gegangen waren.

Die Reaktionszeit bis zu diesem Punkt hängt hierbei von der Größe der eingesetzten Granulate ab. Nach vollständigem Auflösen des r-PET (6 Stunden) wurde zur Vervollständigung der Reaktion noch weitere 4 Stunden am Rückfluss erhitzt. Anschließend wurde abgekühlt auf Raumtemperatur. Der Gehalt von Diglykolterephthalat wurde rechnerisch aus der Einwaage bestimmt.

### Beispiel 1b (Hauptkondensation)

Anschließend wurden in demselben Kolben zu dem Vorprodukt 106,56g Sulfoisophthalsäuredimethylester-Na-Salz (0,36 mol) und 1440 g MPEG 2000 (Methoxypolyethylenglykol mittleres Molekulargewicht 2000) und 50g zusätzliches Etylenglykol zugegeben und dann mittels eines Ölbads unter Stickstoffinertisierung auf 200°C erhitzt. Kleinere Mengen Methanol wurden destillativ entfernt. Nach Ende des Methanolablaufs wurde innerhalb einer halben Stunde bestes Vakuum angelegt (2 mbar) und dabei langsam die Reaktionsmischung erhitzt. Dies erfolgte in einem Maße, dass der Ablauf des überschüssigen Glykols kontolliert ablief. Bei Erreichen von 230°C im besten Vakuum wurde noch 2 Stunden bei gleichen Bedingungen weiter kondensiert. Und anschließend abgekühlt, belüftet und das Produkt als Schmelze bei 120°C auf Stahlbleche ausgetragen.

### Beispiel 2a (Herstellung eines Vorproduktes, Depolymerisationsstufe)

In einem 3 Liter Dreihalskolben mit Rückflusskühler, KPG Rührer und Innenthermometer wurden 200 Gramm gereinigtes r-PET Granulat vorgelegt. Dies entspricht einer molaren Einwaage von 1,44 mol Terephthalsäure (angenommene Dichte von 1,38g/cm³ und einem Molekulargewicht der Repetiereinheit von 192,17 g) und mit 250 ml 1,2-Propylenglykol und 250 ml Ethylenglykol versehen. Nach Inertisierung mit Stickstoff wurde 0,25g Ti(iprop)₄ und 0,35 g Natriumacetat als Umesterungskatalysator zugesetzt und die Reaktionsmischung auf Siedetemperatur erhitzt (etwa190°C). Die Mischung wurde solange am Rückfluss gekocht, bis alle Feststoffanteile in Lösung gegangen waren.

Die Reaktionszeit bis zu diesem Punkt hängt hierbei von der Größe der eingesetzten Granulate ab. Nach vollständigem Auflösen des r-PET (6 Stunden) wurde zur Vervollstängigung der Reaktion noch weitere 4 Stunden am Rückfluss erhitzt. Anschließend wurde abgekühlt auf Raumtemperatur. Der Gehalt von Diglykolterephthalat wurde rechnerisch aus der Einwaage bestimmt.

### Beispiel 2b (Hauptkondensation)

Anschließend wurden in demselben Kolben zu dem Vorprodukt 90,00g Sulfoisophthalsäuredimethylester-Na-Salz (0,30 mol) und 720 g MPEG 1000 (Methoxypolyethylenglykol mittleres Molekulargewicht 1000) und 0,1g Ti(iprop)₄ zusätzlich zugegeben und dann mittels eines Ölbads unter Stickstoffinertisierung auf 200°C erhitzt. Kleinere Mengen Methanol wurden destillativ entfernt. Nach Ende des Methanolablaufs wurde innerhalb einer halben Stunde bestes Vakuum angelegt (2 mbar) und dabei langsam die Reaktionsmischung erhitzt. Dies erfolgte in einem Maße, dass der Ablauf des überschüssigen Glykols kontolliert ablief. Bei Erreichen von 230°C im besten Vakuum wurde noch 2 Stunden bei gleichen Bedingungen weiter kondensiert, anschließend abgekühlt, belüftet und das Produkt als Schmelze bei 120°C auf Stahlbleche ausgetragen

### Beispiel 3a (Herstellung eines Vorproduktes, Depolymerisationsstufe)

In einem 3 Liter Dreihalskolben mit Rückflusskühler, KPG Rührer und Innenthermometer wurden 200 Gramm gereinigtes r-PET Granulat vorgelegt. Dies entspricht einer molaren Einwaage von 1,44 mol Terephthalsäure (angenommene Dichte von 1,38g/cm³ und einem Molekulargewicht der Repetiereinheit von 192,17 g) und mit 500 ml 1,2-Propylenglykol versehen. Nach Inertisierung mit Stickstoff wurde 0,25g Ti(iprop)₄ und 0,35 g Natriumacetat als Umesterungskatalysator zugesetzt und die Reaktionsmischung auf Siedetemperatur erhitzt (etwa190°C). Die Mischung wurde solange am Rückfluss gekocht, bis alle Feststoffanteileile in Lösung gegangen waren.

Die Reaktionszeit bis zu diesem Punkt hängt hierbei von der Größe der eingesetzten Granulate ab. Nach vollständigem Auflösen des r-PET (9 Stunden) wurde zur Vervollstängigung der Reaktion noch weitere 4 Stunden am Rückfluss erhitzt. Anschließend wurde abgekühlt auf Raumtemperatur. Der Gehalt von Diglykolterephthalat wurde rechnerisch aus der Einwaage bestimmt.

### Beispiel 3b (Hauptkondensation)

Anschließend wurden in demselben Kolben zu dem Vorprodukt 90,00g Sulfoisophthalsäuredimethylester-Na-Salz (0,30 mol), 50 g Cyclohexandimethanol und 720 g MPEG 1000 (Methoxypolyethylenglykol mittleres Molekulargewicht 1000) zugegeben und dann mittels eines Ölbads unter Stickstoffinertisierung auf 200°C erhitzt. Kleinere Mengen Methanol wurden destillativ entfernt. Nach Ende des Methanolablaufs wurde innerhalb einer halben Stunde bestes Vakuum angelegt (2 mbar) und dabei langsam die Reaktionsmischung erhitzt..Während der gesamten Kondensation wurden kontinuierlich insgesamt 500 ml 1,2-Propylenglykol über einen geeigneten vakuumfähigen Tropftrichter eingetropft. Dies erfolgt in einem Maße, dass der Ablauf des überschüssigen Glykols kontolliert ablief. Bei Erreichen von 230°C im besten Vakuum wurde noch 2 Stunden bei gleichen Bedingungen weiter kondensiert und anschließend abgekühlt, belüftet und das Produkt als Schmelze bei 120°C auf Stahlbleche ausgetragen

## Patentansprüche

1. Verfahren zur Herstellung von Polyestern, das durch folgende Maßnahmen gekennzeichnet ist:
a) Suspendieren von Polyethylenterephthalatabfällen in Ethylenglykol und/oder in 1,2-Propylenglykol enthaltend einen Umesterungskatalysator,
b) Erhitzen des Reaktionsgemisches zur Depolymerisation der Polyethylenterephthalatabfälle für eine so lange Zeit, bis das Polyethylenterephthalat in Monomere und in Oligomere zerfallen ist,
c) Zugabe von Endgruppen ausbildenden Monomeren in Form von Polyalkylenglykolmonoalkylethern, Fettalkoholen, Fettaminen, Fettsäuren oder Estern davon oder Gemischen von zwei oder mehreren davon, und/oder von Sulfo-(poly)-alkylenglykolen und/oder von Sulfoarylcarbonsäuren oder Estern davon,
d) Zugabe von Sulfoarylendicarbonsäuren oder deren polyesterbildenden Derivaten,
e) gegebenenfalls Zugabe von aliphatischen Diolen, cycloaliphatischen Diolen, organischen Dicarbonsäuren, ihren polyesterbildenden Derivaten, Vernetzern oder Gemischen von zwei oder mehreren davon,
f) Erhitzen des Reaktionsgemisches unter Abdestillieren von Ethylenglykol, gegebenenfalls 1,2-Propylenglykol und weiteren im Reaktionsgemisch vorhandenen oder durch Umesterung und Polykondensation gebildeten Verbindungen, mit der Maßgabe, dass die Temperatur des Reaktionsgemisches 250°C nicht übersteigt.

2. Verfahren nach Anspruch 1, dadurch dass der Polyester bifunktionelle Einheiten ausgewählt aus der Gruppe der Ethylenterephtalateinheiten und Ethylensulfoarylendicarboxylateinheiten oder 1,2-Propylenterephtalateinheiten und 1,2-Propylensulfoarylendicarboxylateinheiten oder Ethylenterephtalateinheiten, Ethylensulfoarylendicarboxylateinheiten, 1,2-Propylenterephtalateinheiten und 1,2-Propylensulfoarylendicarboxylateinheiten enthält, und monofunktionelle Einheiten ausgewählt aus der Gruppe der über endständige Carboxylgruppen des Polyesters gebundenen nichtionischen Endgruppen abgeleitet von Polyalkylenglykolmonoalkylethern, Fettalkoholen, Fettaminen oder Gemischen von zwei oder mehreren davon, und/oder über endständige Carboxylgruppen des Polyesters gebundenen ionischen Endgruppen abgeleitet von Sulfo-(poly)-alkylenglykolen und/oder über endständige Hydroxylgruppen des Polyesters gebundene nichtionische Endgruppen abgeleitet von Fettsäuren oder deren Estern und/oder über endständige Hydroxylgruppen des Polyesters gebundenen ionischen Endgruppen abgeleitet von Sulfoarylcarbonsäuren oder deren Estern, wobei der Anteil aller bifunktionellen Einheiten, bezogen auf den Anteil aller mono- und bifunktionellen Einheiten, minimal 50 mol.-% beträgt und wobei der Anteil aller monofunktionellen Einheiten, bezogen auf den Anteil aller mono- und bifunktionellen Einheiten, maximal 50 mol.-% beträgt.

3. Verfahren nach mindestens einem der Ansprüche 1 oder 2, **dadurch gekennzeichnet, dass** es sich bei den Polyalkylenglykolmonoalkylethern um Verbindungen der Formel (I) handelt, dass es sich bei den Fettalkoholen um Verbindungen der Formel (II) handelt, dass es sich bei den Fettaminen um Verbindungen der Formel (III) handelt, dass es sich bei den Fettsäure(ester)n um Verbindungen der Formel (IV) handelt dass es sich bei den Sulfo-(poly)-alkylenglykolen um Verbindungen der Formel (V) handelt und dass es sich bei den Sulfoarylcarbonsäuren oder deren Estern um Verbindungen der Formel (VI) handelt
H-(O-CₘH₂ₘ)ₙ-OR¹ (I),
R²-OH (II),
R²-NH₂ (III),
R²-COOR³ (IV),
H-(O-CₒH₂ₒ)ₚ-SO₃⁻(Mⁱ⁺)_{1/l} (V),
R³OOC-C₆H₄-SO₃⁻(Mⁱ⁺)_{1/l} (VI),
worin
R¹ C₁-C₆-Alkyl, Cycloalkyl, Aryl oder Aralkyl ist,
R² geradkettiges oder verzweigtes Alkyl mit 6-20 Kohlenstoffatormen bedeutet,
R³ Wasserstoff, C₁-C₆-Alkyl, Cycloalkyl, Aryl oder Aralkyl ist,
m und o unbhängig voneinander 2 oder 3 sind,
n eine ganze Zahl von 5 bis 250 ist
p eine ganze Zahl von 1 bis 10 ist,
M ein Kation der Wertigkeit i ist, und
i eine ganze Zahl von 1 bis 4 bedeutet.

4. Verfahren nach mindestens einem der Ansprüche 1 bis 3, **dadurch gekennzeichnet, dass** es sich bei den Sulfoarylendicarbonsäuren um eine Sulfoisophthalsäure oder ein Salz dieser Säure handelt und dass es sich bei den polyesterbildenden Derivaten davon um einen Mono- oder Diester der Sulfoisophthalsäure oder eines Salzes dieser Säure handelt, insbesondere um eine 5-Sulfoisophthalsäure, ein Alkalisalz der 5-Sulfoisophthalsäure, einen Mono-oder Dialkylester der 5-Sulfoisophthalsäure oder um einen Mono- oder Dialkylester eines Alkalisalzes der 5-Sulfoisophthalsäure handelt.

5. Verfahren nach mindestens einem der Ansprüche 1 bis 4, **dadurch gekennzeichnet, dass** es sich bei den in Schritt a) eingesetzten Polyethylenterephthalatabfällen um Polyethylenterephthalatfasern, Polyethylenterephthalatfolien, aus Polyethylenterephthalatflaschen gewonnene Produkte oder um Abfälle aus der Herstellung und Verarbeitung von Polyethylenterephthalat handelt.

6. Verfahren nach Anspruch 5, **dadurch gekennzeichnet, dass** die Polyethylenterephthalatabfälle in der Form von Scheiben oder Zylindern vorliegen, die vorzugsweise einen Durchmesser von 10 µm bis 20 cm, insbesondere bevorzugt von 0,1 cm bis 10 cm aufweisen.

7. Verfahren nach mindestens einem der Ansprüche 1 bis 6, **dadurch gekennzeichnet, dass** in Schritt b) das Reaktionsgemisch auf Temperaturen von 150 bis 200°C mindestens solange erhitzt wird, bis alle festen Bestandteile sich aufgelöst haben.

8. Verfahren nach mindestens einem der Ansprüche 1 bis 7, **dadurch gekennzeichnet, dass** in Schritt c) oder d) als weitere Bestandteile Alkandicarbonsäuren, Cycloalkandicarbonsäuren oder Aryldicarbonsäuren, polyesterbildende Derivate dieser Dicarbonsäuren oder Gemische von zwei oder mehreren dieser Verbindungen zugegeben werden, vorzugsweise Adipinsäure, Sebazinsäure, Cyclohexandicarbonsäure, Phthalsäure, Isophthalsäure oder die Mono- oder Dialkylester dieser Dicarbonsäuren.

9. Verfahren nach mindestens einem der Ansprüche 1 bis 8, **dadurch gekennzeichnet, dass** in Schritt e) als weitere Bestandteile Alkandiole, die sich von Ethylenglykol oder 1,2- Propylenglykol unterscheiden, oder Cycloalkandiole oder Gemische von zwei oder mehreren dieser Verbindungen zugegeben werden, vorzugsweise 1,2-Butylenglykol, Polyethylenglykol, Polypropylenglykol oder Dimethylolyclohexan.

10. Verfahren nach mindestens einem der Ansprüche 1 bis 9, **dadurch gekennzeichnet, dass** in Schritt f) das Reaktionsgemisch auf Temperaturen von 150 bis 250°C erhitzt wird, wobei das Abdestillieren von flüchtigen Verbindungen durch Anlagen eines Vakuums unterstützt wird.

11. Verfahren nach Anspruch 10, **dadurch gekennzeichnet, dass** der Druck in Schritt f) 5 bis 500 mbar beträgt.

12. Verfahren nach mindestens einem der Ansprüche 1 bis 11, **dadurch gekennzeichnet, dass** nach Beendigung von Schritt f) das heiße Reaktionsgemisch in einem Schritt g) abkühlen gelassen wird, wodurch das gewünschte Endprodukt als Feststoff anfällt.

13. Verfahren nach Anspruch 12, **dadurch gekennzeichnet, dass** das feste Endprodukt in einem Schritt h) von den flüssigen Bestandteilen des Reaktionsgemisches abgetrennt wird.

14. Verfahren nach mindestens einem der Ansprüche 1 bis 11, **dadurch gekennzeichnet, dass** das nach Beendigung der Polykondensation in Schritt f) angefallene Verfahrensprodukt aus dem Reaktor in eine Granulierungsvorrichtung überführt wird und zu Granulat verarbeitet wird.

15. Verfahren nach mindestens einem der Ansprüche 13 bis 14, **dadurch gekennzeichnet, dass** das feste Verfahrensprodukt in Wsser oder in einem wässrig-alkoholischen Gemisch aufgelöst wird.
